# EUROPEAN PATENT SPECIFICATION

(11) **EP 3 839 302 B1**
(45) Date of publication and mention of the grant of the patent: **03.04.2024**
(21) Application number: 20215838.2
(22) Date of filing: 18.12.2020
(51) Int. Cl.: F16K 5/06, B01D 35/04, F16K 27/06

(54) **FLUID VALVE**
VENTIL
VANNE

(30) Priority: 20.12.2019 IT 201900025174
(43) Date of publication of application: 23.06.2021
(73) Proprietor: Greiner S.p.A., 25065 Lumezzane (BS) (IT)
(72) Inventor: ASTORI, Giorgio, 25065 Lumezzane (BS) (IT); LENA, Roberto, 25065 Lumezzane (BS) (IT)
(74) Representative: Marietti, Andrea

(56) References cited:
- CN-U- 204 358 159
- CN-U- 204 628 620
- JP-A- S 629 072
- JP-A- 2002 130 496
- JP-U- S6 287 265

## Description

### FIELD OF THE INVENTION

The present invention concerns a fluid valve, in particular for water.

### KNOWN PRIOR ART

According to the known art, a fluid valve comprises a valve body provided with an inlet section and an outlet section for the fluid, and a shutter, normally ball-shaped, arranged inside a housing obtained inside the valve body and provided with an inner duct for the passage of the fluid. Such a shutter is rotatably constrained inside the housing between a first position, wherein the passage of the fluid between the inlet section and the outlet one is allowed through the inner duct of the shutter, and a second position, wherein the passage of the fluid between the inlet section and the outlet one is prevented. Typically, the valve further comprises two sealing gaskets, for example of the cylindrical type, arranged between the shutter and the housing, in the proximity of the inlet and outlet sections of the valve body.

It is also known to arrange filters inside the ball (or anyhow of the shutter) so that to prevent the passage of undesired elements from the inlet section to the outlet section.

CN204358159U discloses a valve according to the preamble of independent claim 1.

However, such filters have limited efficiency and are subject to frequent occlusions.

Over time, this can decrease the flow rate of fluid crossing the valve in an obviously undesirable way. Moreover, the fluid can exert, at the occlusions, high pressure on the filter, with the possibility of deforming and/or damaging it, thus compromising its operation (and thus allowing the passage of undesirable elements through the valve). Object of the present invention is thus to implement a valve with a more efficient filter than those of the known art.

Further object of the present invention is to implement a valve that is more hygienic than those of the known art.

Further object of the present invention is to implement such a valve in a simple way. These and further objects are achieved by means of a fluid valve according to one or more of the accompanying claims.

Particular object of the present invention is a valve according to the main claim, whereas preferred aspects are set forth in the dependent claims.

According to an aspect, a fluid valve comprises a valve body provided with an inlet section and an outlet section for the fluid, and a shutter arranged inside a housing obtained inside the valve body and provided with an inner duct for the passage of the fluid. The shutter is at least rotatably constrained inside the respective housing between a first open position, wherein the passage of fluid between the inlet section and the outlet section through the inner duct is allowed, and a second closed position, wherein the passage of fluid between the inlet section and the outlet section is prevented. The valve further comprises sealing elements between the shutter and the housing of the valve body, which is provided with a seat for a filtering element. Part of the seat is made inside the shutter so that, in use, a first portion of the filtering element is inserted in the shutter and a second portion of the filtering element protrudes from the shutter. The second portion is inserted, for at least part of its extent, with clearance in the seat, that is typically obtained inside the valve body at the second portion of the filtering element, so that to obtain a fluidic chamber at least between the second portion of the filtering element and the seat. The fluidic chamber is fluidically connected to the outlet section, so that the fluid present inside the fluidic chamber can be ejected from the valve through the outlet section.

Thanks to the present solution, it is possible to position a filter inside a valve in a simple way. The fluidic chamber allows to increase the active surface of the filtering element, i.e. to increase the surface through which the fluid is forced to pass. This way, the implementation of preferential channels for the fluid can be avoided, and the possibility of occlusion forming is reduced.

According to an aspect, the second portion of the filtering element has a height greater than 1/4 the height of the first portion of the filtering element, preferably greater than 1/2 the height of the first portion.

According to a possible aspect, at least in a point of the second portion, the distance between the second portion and the seat is greater than 0.5 mm, preferably greater than 1 mm. Thanks to this, it is possible to ensure high efficiency and an effective passage of fluid inside the fluidic chamber.

According to the claimed invention, the fluidic chamber extends at least partially also between the first portion and the seat. It is preferable that, at least in a point of the first portion, the distance between the first portion and the seat is greater than 0.5 mm, preferably greater than 1 mm.

According to the claimed invention, the filtering element comprises a filter and a filter-holder element.

According to an aspect, the filter has a substantially cylindrical shape.

According to an aspect, in the second portion, the minimum distance between the filter and the seat is greater than 0.5 mm, preferably greater than 1 mm.

According to an aspect, a removable covering element is arranged on the valve body at an end of the filtering element, at the second portion.

Thanks to this, it is possible to carry out the assembling and disassembling operations of the filtering element with respect to the valve body in a simple way. Moreover, the operations of cleaning the filtering element are facilitated.

According to an aspect, the filtering element is arranged substantially perpendicular to the axis of the inlet section and/or to the axis of the outlet section.

According to an aspect, the filtering element and the chamber are configured so that, in use, the surface of the filtering element crossed by a fluid is at least 5 times, preferably at least 7 times greater than the surface of the section of the inner duct. According to the claimed invention, the valve is configured so that the filtering element rotates integrally with the shutter, by means of one or more protrusions made on the filtering element.

This allows to orient the valve freely, in particular vertically, without risking that the filtered material can be carried, towards the inlet section, for example by gravity.

### BRIEF DESCRIPTION OF THE DRAWINGS

Several particular embodiments of the present invention will now be described by way of example only and without implying any limitation with reference to the accompanying figures, in which:
- figure 1 is a sectional view of a valve according to an embodiment of the present invention, with the shutter in the open position;
- figure 2 is an enlarged view of a detail of figure 1;

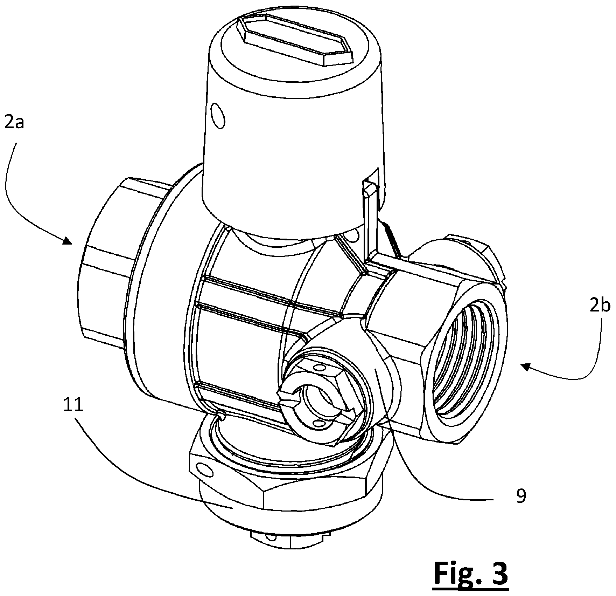

- figure 3 is a perspective view of the valve of figure 1;
- figures 4A - 4C are respectively front, sectional side and perspective views of the filtering element of the valve of figure 1.

### DETAILED DESCRIPTION OF SOME EMBODIMENTS OF THE PRESENT INVENTION

A fluid valve 1 according to the invention, in particular for water, although it is not intended to limit the use of the valve 1 with such fluid, comprises a valve body 2 provided with an inlet section 2a and an outlet section 2b for the fluid.

The valve 1 further comprises a shutter 3, typically ball-shaped, arranged inside a housing 4 obtained inside the valve body 2 and provided with a cylindrical inner duct 3a for the passage of the fluid. It should be noted that in further embodiments the inner duct 3a may also not be cylindrical, without thereby departing from the protection scope of the present invention. The shutter 3 is rotatably constrained inside the housing 4 between a first open position, wherein the passage of fluid between the inlet section 2a and the outlet section 2b through the inner duct 3a is allowed, and a second closed position, wherein the passage of fluid between said inlet section 2a and the outlet section 2b of the valve body 2 is prevented.

According to the embodiment described herein, the valve 1 further comprises an operating shaft 10 integrally constrained to the shutter 3 for rotating the shutter 3 between the first open position and the second closed position, and vice-versa. In a known way, an actuator element 10a, typically in the form of a handwheel or similar element, is preferably constrained to the operating shaft 10, so that to allow to operate the operating shaft 10 from outside of the valve 1.

The valve 1 further comprises sealing elements 5 between the shutter 3 and the housing 4 of the valve body 2. Such sealing elements 5 are arranged in a known way so that to prevent fluid leaks from the valve 1.

Typically, such sealing elements 5 comprise gaskets arranged at the shutter 3.

A hole 9, which can for example act as a pressure fitting, as an outlet, etc., is preferably present inside the valve body 2, downstream of the shutter 3 (considering the direction of the fluid inside the valve 1 which, in the embodiment shown, flows from left to right).

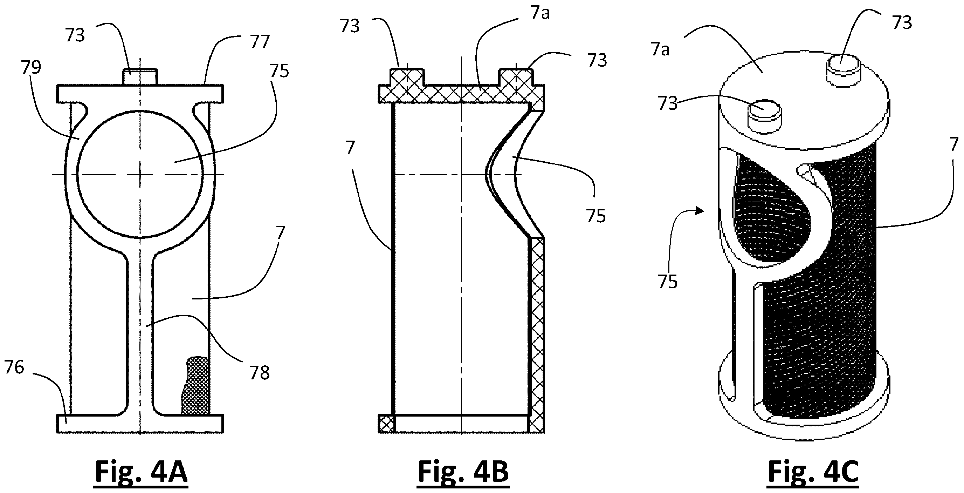

The valve 1 further comprises a filtering element 7, 7a. A possible embodiment of such filtering element is shown in detail in figures 4A - 4C.

According to the claimed invention, the filtering element 7, 7a comprises a filter 7 and a filter-holder element 7a.

The filter 7 is configured, in a known way, so that to be permeable to a fluid (or at least to the fluid with which the valve 1 is intended to operate) although retaining, i.e. preventing the passage to, some elements. Typically, the filter 7 comprises a grid (generally made of metal). The width of the mesh of the grid defines the dimension of the elements that can cross the filter 7 and which elements are instead restrained by it. Generally, the entire filter 7 is made from a grid, i.e. the grid comprises the entire side surface of the filter 7.

For ease of view, it should be noted how the grid is shown entirely only in figure 4C, whereas it is only shown on a small part of the side surface of the filter 7 in figure 4A. The filter 7 typically has cylindrical shape, although other shapes are possible (for example prism or parallelogram).

The filter 7 typically further has a hole 75 which allows the fluid to enter the filter 7. Once inside, the fluid crosses the filter 7, proceeding towards the outlet section 2b, whereas foreign elements are restrained inside the filter 7. The hole 75 is typically arranged so that, in the open position of the shutter 3, the hole 75 is facing the inlet section 2a.

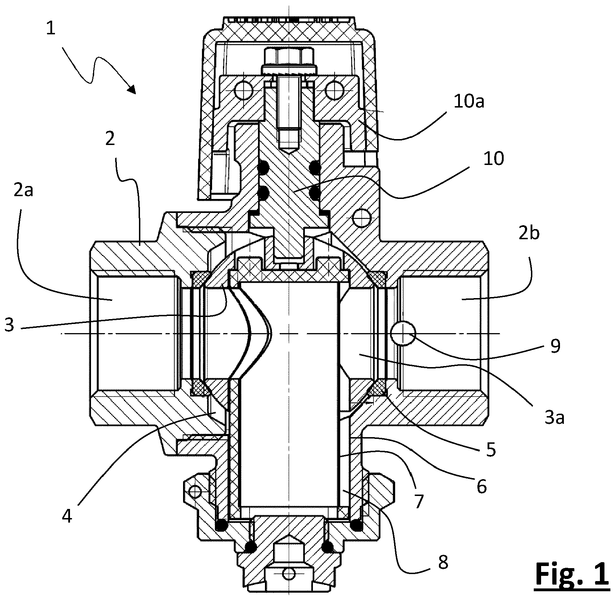

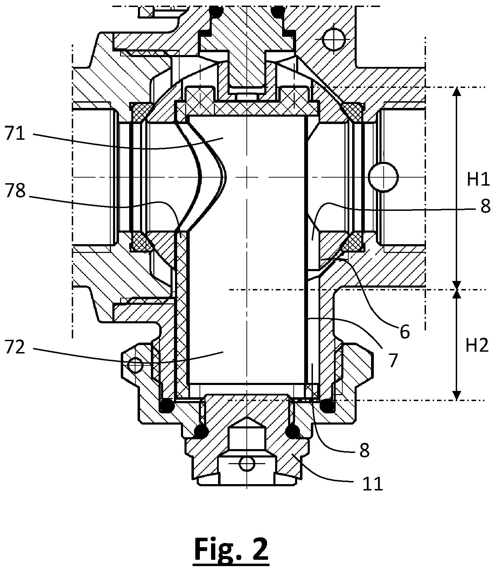

The filter 7 is coupled to a filter-holder element 7a. The filter-holder element 7a typically facilitates the operations of assembling and disassembling the filter 7 to/from the valve body 2. Moreover, the filter-holder element 7a allows to increase the rigidity of the filter 7, thus preventing its deformation. For example, the filter-holder 7a can have a ring-shaped element 79 arranged at the hole 75 (and in particular at its edges) so that to prevent the pressure acting on the edges of the hole 75 from deforming the filter 7. In particular, preferred embodiments of the present invention comprise a filter-holder 7a provided with a lower wall 76 and an upper wall 77 adapted to be constrained above and below the filter 7. A rib 78 is preferably connected to the ring-shaped element 79. The rib 78 and ring 79 assembly is connected to the upper and lower walls of the filter-holder 7a. The rib and ring are arranged so that to be arranged laterally and outside of the filter 7, typically in contact with its side surface. It should be noted how the rib 78 is shown in section on the left of the filter 7 in figures 1 and 2, between the filter 7 and seat 6. However, as shown in figures 4A - 4C, the rib 78 has limited thickness, so that the chamber 8 is arranged almost entirely around the filtering element 7, 7a.

The filtering element 7, 7a rotates integrally with the shutter 3. This is achieved by means of the following solution: the filtering element 7, 7a is provided with one or more protrusions 73, which allow to couple the rotation of the filtering element 7, 7a to the shutter. Typically, the protrusions 73 are coupled to respective housings of the shutter 3. Various embodiments are possible. For example, the filtering element 7, 7a can be provided with two or more protrusions protruding from the upper surface of the filtering element 7, 7a or anyhow from the surface facing the operating shaft 10. The protrusions can be substantially identical to each other or have differences between each other, so that to allow a single mode for properly inserting the filtering element into the valve 1.

Similarly, in different embodiments not forming part of the claimed invention, the filtering element 7, 7a could have cavities inside which, for example, matching protrusions of the shutter 3 or operating shaft 10 could be inserted.

Moreover, a single protrusion, having non-circular section, could be enough to ensure the rotational coupling between the filtering element 7, 7a and the shutter 3.

The valve 1 further comprises a seat 6 for the filtering element 7, 7a. Such seat is obtained partially inside the shutter 3, and partially inside the valve body 2.

Thanks to this, when the filtering element 7, 7a is assembled to the valve 1, a first portion 71 of the filtering element is arranged inside the shutter 3, whereas a second portion 72 of the filtering element protrudes from the shutter 3.

The second portion 72 (i.e. the portion of the filtering element that, in use, protrudes from the shutter 3) has dimensions that are not negligible with respect to the first portion 71. In preferred embodiments, the height H2 of the second portion 72 is equal to or greater than 1/4 the height H1 of the first portion 71, preferably equal to or greater than 1/2 the height H1 of the first portion. It should be noted that "height" means the dimension measured in the direction of the largest dimension of the filtering element. If the filtering element (or at least the respective filter 7) has cylindrical shape, the heights H1 and H2 of the portions 71, 72 are measured along the axis of the cylinder.

At least part of the second portion 72 of the filtering element 7, 7a is inserted with clearance into the respective seat 6. In particular, since the filtering element 7, 7a comprises a filter 7 and a filter-holder 7a, the filter 7 is inserted with clearance into the seat 6, whereas the filter-holder 7a can be in contact with the seat 6.

Thanks to such clearance, a fluidic chamber 8 is formed at least between the second portion 72 and the seat 6. According to the claimed invention, the chamber 8 also partly extends between the seat 6 and the first portion 71, such as for example shown in figure 2.

In other words, fluid can flow around the filter 7. Preferably, such fluidic chamber 8 (henceforth also "chamber 8") substantially extends at least along the entire height H2 of the second portion 72 of the filtering element 7, 7a.

Preferably, at least in a point, at least at the second portion 72 and preferably also at the first portion 71 if the chamber 8 also extends in such portion, the chamber 8 has a thickness (i.e. distance between the filtering element 72 and seat 6) greater than 0.5 mm, preferably greater than 1 mm.

According to the claimed invention, at least for 80% of the height of the filter, preferably for at least 90% of the height of the filter 7, more preferably for the entire height of the filter 7, the distance between the filter 7 and the seat 6 (considered laterally to the filter 7) is always greater than 1 mm. It should be noted how the distance can also be measured when elements are interposed between the filter 7 and the seat 6. For example, in some points of the side surface of the filter 7, the filter-holder is interposed between the filter 7 and seat 6, it being in contact with both elements. Also in such case however, the distance between the filter 7 and the seat 6 is greater than 1 mm, even though a further element is present within such distance (i.e. such space).

Thus, generally, the filtering element 7, 7a is inserted with clearance in the respective seat, so that a fluidic chamber 8 forms between the filtering elements 7, 7a and the seat 6, so that to allow the fluid to at least partially surround the filtering element.

In particular, according to a preferred aspect, such clearance allows that, in use, the surface of the filtering element 7, 7a crossed by a fluid is at least 5 times, preferably at least 7 times greater than the surface of the section of the inner duct 3a. In other words, in use, the "active" surface of the filter, i.e. the one crossed by a fluid and thus the one placed at the chamber 8, has a surface 5 times greater than the area of the inner duct 3 a of the shutter 3.

The chamber 8 is in fluidic communication with the outlet section 2b and (typically by means of the filter 7 of the filtering element 7, 7a) also with the inlet section 2a of the valve 1.

The fluid crossing the filtering element 7, 7a and ending up in the chamber 8 can thus leave the valve 1 through the outlet section 2b.

According to preferred embodiments, the filtering element is oriented perpendicularly to at least one of the inlet section 2a and the outlet section 2b (to both when they are coaxial). Perpendicular means that the axis of the filtering element is substantially perpendicular to at least one of the axis of the inlet section 2a and the axis of the outlet section 2b. Thus, if the valve 1 is arranged substantially vertical in a hydraulic circuit, the filtering element is arranged substantially horizontal.

At the end of the second portion 72, the valve 1 typically has a covering element 11 removably constrainable to the valve body 2. The covering element 11 can be made in one piece or, as in the case shown in the figures, of several components constrained to each other.

The removal of the covering element allows to access the filtering element 7, 7a from the outside, thus allowing different operations thereon, among which those of removing, inserting, cleaning, discharging, etc. In particular, as stated, the covering element 11 can be made of several elements, for example a main body connected to the valve body 2, and a cap having smaller dimensions with respect to the main body and connected to the latter so that to allow, for example, the operations of cleaning or discharging the valve 1.

In use, a fluid enters the valve 1 through the inlet section 2a. If the shutter 3 is in the open position, the fluid crosses the valve and comes out of the outlet section 2b. Before coming out, however, the fluid crosses the filtering element, so that foreign elements are restrained by the filtering element, so that to prevent them from coming out of the outlet section 2b. In particular, the fluid crosses the filtering element, so that the filtering element is surrounded (at least partially) by it. Almost the entire side surface of the filtering element is thus active (i.e. is crossed by the fluid), which is thus also arranged in the fluidic chamber 8. From here, the fluid can subsequently come out of the valve 1 through the outlet section 2b.

## Claims

1. Fluid valve (1) comprising a valve body (2) provided with an inlet section (2a) and an outlet section (2b) for said fluid, and a shutter (3) arranged inside a housing (4) obtained inside said valve body (2) and provided with an inner duct (3a) for the passage of said fluid, said shutter (3) being at least rotatably constrained inside said housing (4) between a first open position, wherein the passage of fluid between said inlet section and said outlet section through said inner duct (3a) is allowed, and a second closed position, wherein the passage of fluid between said inlet section and said outlet section is prevented, said valve (1) further comprising sealing elements (5) between said shutter (3) and said housing (4) of said valve body (2), said valve body (2) being provided with a seat (6) for a filtering element (7, 7a), comprising a filter (7) and a filter-holder element (7a), part of said seat (6) being made inside said shutter (3) so that, in use, a first portion (71) of said filtering element (7, 7a) is inserted in said shutter (3) and a second portion (72) of said filtering element (7, 7a) protrudes from said shutter (3), said second portion (72) being inserted, for at least part of its extent, with clearance in the seat (6) so that to obtain a fluidic chamber (8) at least between said second portion of said filtering element (7, 7a) and said seat (6), said fluidic chamber (8) being fluidically connected to said outlet section (2b), wherein said fluidic chamber (8) extends at least partially also between said first portion (71) and said seat (6), **characterised in that** at least for 80% of the height of the filter (7), the distance between the filter (7) and the seat (6), considered laterally to the filter (7), is always greater than 1 mm, and **in that** the valve (1) is configured so that said filtering element (7, 7a) rotates integrally with said shutter (3) by means of one or more protrusions (73) made on said filtering element.

2. Fluid valve (1) according to claim 1 wherein, at an end of the second portion (72), the valve (1) has a covering element (11) removably constrainable to the valve body (2), the covering element (11) being made of several components constrained to each other.

3. Fluid valve (1) according to claim 2, wherein the covering element (11) is made of a main body connected to the valve body (2), and a cap having smaller dimensions with respect to the main body and connected to the latter so that to allow the operations of cleaning or discharging the valve (1).

4. Valve (1) according to claim any preceding claim, wherein the second portion (72) of said filtering element (7, 7a) has a height (H2) greater than 1/4 the height (H1) of the first portion (71) of the filtering element, preferably greater than 1/2 the height (H1) of the first portion (71).

5. Valve (1) according to any preceding claim, wherein said filter (7) has a substantially cylindrical shape.

6. Valve (1) according to any preceding claim, in said second portion (72), the minimum distance between said filter (7) and said seat (6) is greater than 1 mm.

7. Valve (1) according to one of the preceding claims, wherein said filtering element is arranged substantially perpendicular to the axis of said inlet section (2a) and/or to the axis of said outlet section (2b).

8. Valve (1) according to one of the preceding claims, wherein said filtering element (7, 7a) and said chamber (8) are configured so that, in use, the surface of the filter (7) crossed by a fluid is at least 5 times, preferably at least 7 times greater than the surface of the section of said inner duct (3a).

## Patentansprüche

1. Fluidventil (1), aufweisend einen Ventilkörper (2), der mit einem Einlassabschnitt (2a) und einem Auslassabschnitt (2b) für das Fluid versehen ist, und einen Stopfen (3), der in einem Gehäuse (4) angeordnet ist, erhalten im Inneren des Ventilkörpers (2), und der mit einem Innenkanal (3a) für den Durchgang des Fluids versehen ist, wobei der Stopfen (3) im Inneren des Gehäuses (4) drehbar zumindest zwischen einer ersten offenen Position, in der der Durchgang des Fluids zwischen dem Einlassabschnitt und dem Auslassabschnitt durch den Innenkanal (3a) zugelassen ist, und einer zweite geschlossene Position, in der der Durchgang des Fluids zwischen dem Einlassabschnitt und dem Auslassabschnitt verhindert ist, gezwungen ist, wobei das Ventil (1) außerdem Dichtungselemente (5) zwischen dem Stopfen (3) und dem Gehäuse (4) des Ventilkörpers (2) aufweist, wobei der Ventilkörper (2) mit einem Sitz (6) für ein Filterelement (7, 7a) versehen ist, aufweisend einen Filter (7) und ein Filterhalteelement (7a), wobei ein Teil des Sitzes (6) innerhalb des Stopfens (3) hergestellt ist, so dass im Gebrauch ein erster Abschnitt (71) des Filterelements (7, 7a) in den Stopfen (3) eingeführt ist und ein zweiter Abschnitt (72) des Filterelements (7, 7a) aus dem Stopfen (3) hervorragt, wobei der zweite Abschnitt (72) zumindest über einen Teil seiner Erstreckung mit Spiel in den Sitz (6) eingesetzt ist, so dass zumindest zwischen dem zweiten Abschnitt des Filterelements (7, 7a) und des Sitzes (6) eine Fluidkammer (8) erhalten ist, wobei die Fluidkammer (8) mit dem Auslassabschnitt (2b) fluidisch verbunden ist, wobei sich die Fluidkammer (8) zumindest teilweise auch zwischen dem ersten Abschnitt (71) und dem Sitz (6) erstreckt, **dadurch gekennzeichnet, dass** mindestens für 80 % der Höhe des Filters (7) der Abstand zwischen dem Filter (7) und dem Sitz (6), betrachtet lateral zu dem Filter (7), immer größer als 1 mm ist, und dadurch, dass das Ventil (1) derart konfiguriert ist, dass das Filterelement (7, 7a) integral mit dem Stopfen (3) mittels einer oder mehrerer Vorsprünge (73), die am Filterelement angebracht sind, dreht.

2. Fluidventil (1) nach Anspruch 1, wobei das Ventil (1) an einem Ende des zweiten Abschnitts (72) ein Abdeckelement (11) aufweist, welches entfernbar an den Ventilkörper (2) gezwungen ist, wobei das Abdeckelement (11) aus mehreren Komponenten hergestellt ist, die gegeneinander gezwungen sind.

3. Fluidventil (1) nach Anspruch 2, wobei das Abdeckelement (11) aus einem Hauptkörper, der mit dem Ventilkörper (2) verbunden ist, und einer Kappe hergestellt ist, die geringere Dimensionen in Bezug auf den Hauptkörper aufweist und mit dem letzteren verbunden ist, so dass die Arbeitsschritte des Reinigens und Entladens des Ventils (1) ermöglicht sind.

4. Ventil (1) nach einem der vorhergehenden Ansprüche, wobei der zweite Abschnitt (72) des Filterelements (7, 7a) eine Höhe (H2) aufweist, die größer als 1/4 der Höhe (H1) des ersten Abschnitts (71) des Filterelements, vorzugsweise größer als 1/2 der Höhe (H1) des ersten Abschnitts (71), ist.

5. Ventil (1) nach einem der vorhergehenden Ansprüche, wobei der Filter (7) eine im Wesentlichen zylindrische Form aufweist.

6. Ventil (1) nach einem der vorhergehenden Ansprüche, wobei in dem zweiten Abschnitt (72) der minimale Abstand zwischen dem Filter (7) und dem Sitz (6) größer als 1 mm beträgt.

7. Ventil (1) nach einem der vorhergehenden Ansprüche, wobei das Filterelement im Wesentlichen senkrecht zu der Achse des Einlassabschnittes (2a) und/oder der Achse des Auslassabschnitts (2b) angeordnet ist.

8. Ventil (1) nach einem der vorhergehenden Ansprüche, wobei das Filterelement (7, 7a) und die Kammer (8) derart konfiguriert sind, dass im Gebrauch die von einem Fluid durchquerte Oberfläche des Filters (7) mindestens 5-mal, vorzugsweise mindestens 7-mal, größer als die Oberfläche des Abschnitts des Innenkanals (3a) ist.

## Revendications

1. Vanne de fluide (1) comprenant un corps de vanne (2) pourvu d'une section d'entrée (2a) et d'une section de sortie (2b) pour ledit fluide, et un obturateur (3) disposé à l'intérieur d'un boîtier (4) obtenu à l'intérieur dudit corps de vanne (2) et pourvu d'un conduit intérieur (3a) pour le passage dudit fluide, ledit obturateur (3) étant au moins contraint en rotation à l'intérieur dudit boîtier (4) entre une première position d'ouverture, dans laquelle le passage du fluide entre ladite section d'entrée et ladite section de sortie à travers ledit conduit intérieur (3a) est autorisé, et une seconde position fermée, dans laquelle le passage de fluide entre ladite section d'entrée et ladite section de sortie est empêché, ladite vanne (1) comprenant en outre des éléments d'étanchéité (5) entre ledit obturateur (3) et ledit boîtier (4) dudit corps de vanne (2), ledit corps de vanne (2) étant pourvu d'un siège (6) pour un élément filtrant (7, 7a), comprenant un filtre (7) et un élément porte-filtre (7a), une partie dudit siège (6) étant réalisée à l'intérieur dudit obturateur (3) de sorte que, en utilisation, une première partie (71) dudit élément filtrant (7, 7a) est insérée dans ledit obturateur (3) et qu'une seconde partie (72) dudit élément filtrant (7, 7a) fait saillie dudit obturateur (3), ladite seconde partie (72) étant insérée, au moins sur une partie de son étendue, avec un jeu dans le siège (6) de manière à obtenir une chambre fluidique (8) au moins entre ladite seconde partie dudit élément filtrant (7, 7a) et ledit siège (6), ladite chambre fluidique (8) étant reliée fluidiquement à ladite section de sortie (2b), dans laquelle ladite chambre fluidique (8) s'étend au moins partiellement également entre ladite première partie (71) et ledit siège (6), **caractérisée en ce que**
au moins pour 80% de la hauteur du filtre (7), la distance entre le filtre (7) et le siège (6), considérée latéralement par rapport au filtre (7), est toujours supérieure à 1 mm, et **en ce que**
la vanne (1) est configurée pour que ledit élément filtrant (7, 7a) tourne solidairement avec ledit obturateur (3) au moyen d'une ou plusieurs saillies (73) réalisées sur ledit élément filtrant.

2. Vanne de fluide (1) selon la revendication 1 dans laquelle, à une extrémité de la seconde portion (72), la vanne (1) a un élément de recouvrement (11) pouvant être contraint de manière amovible au corps de vanne (2), l'élément de recouvrement (11) étant constitué de plusieurs composants contraints les uns aux autres.

3. Vanne de fluide (1) selon la revendication 2, dans laquelle l'élément de recouvrement (11) est constitué d'un corps principal relié au corps de vanne (2), et d'un capuchon ayant des dimensions plus petites par rapport au corps principal et relié à ce dernier de manière à permettre les opérations de nettoyage ou de déchargement de la vanne (1).

4. Vanne (1) selon l'une quelconque des revendications précédentes, dans laquelle la seconde partie (72) dudit élément filtrant (7, 7a) a une hauteur (H2) supérieure à 1/4 de la hauteur (H1) de la première partie (71) de l'élément filtrant, de préférence supérieure à 1/2 de la hauteur (H1) de la première partie (71).

5. Vanne (1) selon l'une quelconque des revendications précédentes, dans laquelle ledit filtre (7) a une forme sensiblement cylindrique.

6. Vanne (1) selon l'une quelconque des revendications précédentes, dans ladite seconde partie (72), la distance minimale entre ledit filtre (7) et ledit siège (6) est supérieure à 1 mm.

7. Vanne (1) selon l'une des revendications précédentes, dans laquelle ledit élément filtrant est disposé sensiblement perpendiculairement à l'axe de ladite section d'entrée (2a) et/ou à l'axe de ladite section de sortie (2b).

8. Vanne (1) selon l'une des revendications précédentes, dans laquelle ledit élément filtrant (7, 7a) et ladite chambre (8) sont configurés pour que, en utilisation, la surface du filtre (7) traversée par un fluide soit au moins 5 fois, de préférence au moins 7 fois supérieure à la surface de la section dudit conduit intérieur (3a).
